# EUROPEAN PATENT APPLICATION

(11) **EP 3 239 392 A1**
(43) Date of publication of application: **01.11.2017**
(21) Application number: 15873452.5
(22) Date of filing: 14.10.2015
(51) Int. Cl.: D06M 15/21, D06M 15/564, D01F 6/76

(54) **METHOD FOR COATING PROCESSING OF POLYKETONE YARN**

(30) Priority: 23.12.2014 KR 20140187283
(71) Applicant: Dyetec Researcher, Seo-gu, Daegu 41706 (KR); Young Poong Chemical Co. Ltd, Seo-gu, Daegu 41706 (KR)
(72) Inventor: KIM, Sang Yong, Dalseong-gun Daegu 42927 (KR); LEE, Do Hyun, Daegu 41584 (KR); JEON, Jae Woo, Daegu 41159 (KR); YANG, Sung Yong, Dalseong-gun Daegu 42913 (KR); LEE, In Sook, Geochang-gun Gyeongsangnam-do 50130 (KR)
(74) Representative: Peters, Sebastian Martinus
(86) International application number: PCT/KR2015/010815
(87) International publication number: WO 2016/104924

(57) **Abstract**

The present invention relates to a method for coating processing of a polyketone yarn and, specifically, to a method for coating processing of a polyketone yarn capable of remedying the disadvantages of a polyketone material regarding color, UV vulnerability, fastness, etc., providing excellent functionality for expanded use and improving mechanical properties by the coating processing of an industrial polyketone fiber yarn using an extruder for yarn coating.

## Description

### Technical Field

The present invention relates to a polyketone yarn coating processing method, and more particularly, to a polyketone yarn coating processing method in which an industrial polyketone yarn is surface-coated using an extruder for yarn coating, thereby imparting color and three-dimensional effects to the polyketone yarn, and other functional preparations are added to improve UV color fastness and the like.

### Background Art

As for polyketone materials, which have not yet been globally commercialized, there are yet to be any firms in need thereof. However, when such materials are mass-produced, the market share thereof is expected to reach about 10% to about 30% that of existing super materials, and these polyketone materials exhibit physical properties that are about 80% to about 90% those of super materials, while having higher interfacial adhesion, and, due to their low cost, can be used in tire cords and MRG, and for other industrial and daily life applications, and thus are expected to be used by many enterprises.

Thus, there is a need to develop the world's first technique for the commercialization of polyketone fibers, and to develop and possess technology related to manufacturing techniques for customized development according to applications.

In the case of polyketone fiber materials, development potential thereof has long been recognized due to their intrinsic physical properties and cost performance, the accumulation of techniques therefor has been constantly pursued, and many technical databases (DBs) are accumulated at laboratory scale. However, most enterprises have postponed mass-production thereof due to high production equipment investment and construction costs relative to excellent physical properties and cost performance, and thus these materials are not being mass produced.

In addition to combination of existing domestic fiber technologies, new manufacturing techniques for novel materials, and convergence of new technologies derived from other industries, there is a need to develop processing techniques adapted to polyketone materials. In addition, to expand the use of these materials to industrial fiber products and household fiber products, there is a need to develop processing techniques for novel materials through upgrading of mechanical and physical properties, functionality, and the like thereof.

Polyketone materials can be used as metal replacement materials of automobile components and electronic parts due to high chemical resistance and high strength, can be utilized as high-quality MRG and tire cords materials based on high interfacial adhesion while having strength which is about 80% to about 90% that of existing super materials, and are highly expected to be used as low-cost super fibers due to high price competitiveness, i.e., being cheaper than aramids and other super fibers. Thus, high initial investment costs can be sufficiently handled thanks to existing original technologies and ongoing technological development, and both the establishment of completely new advanced technologies and high global market share are expected.

An object of the present invention is to provide a material that can be used in many applications and has excellent functionality and mechanical and physical properties through coating and extrusion processing for yarns using a polyketone fiber material which targets for the world's first mass-production.

### Disclosure

### Technical Problem

Therefore, the present invention has been made in view of the above problems, and it is one object of the present invention to provide a polyketone yarn coating processing method in which disadvantages of a polyketone material, such as UV susceptibility, color fastness, and the like, may be compensated for by performing coating processing of a polyketone yarn using an extruder for yarn coating, and whereby excellent functionality may be imparted to the polyketone yarn and mechanical and physical properties thereof may be enhanced to be used for many applications.

### Technical Solution

In accordance with one aspect of the present invention, provided is a polyketone yarn coating processing method including: introducing a polyvinyl chloride coating agent or a thermoplastic polyurethane coating agent into an extruder for yarn coating; and applying the coating agent to a surface of a polyketone yarn by the extruder.

At this time, the applying may be performed at a temperature of 160°C or less and an operating rate of 500 mpm or less, and the coating agent is applied to the polyketone yarn in an amount of 0.400 g/m or less.

In addition, the coating agent may further include one selected from a UV stabilizer and a color master batch chip.

In addition, the polyketone yarn coating processing method may further include, after the applying, one or more post-processing processes selected from the group consisting of weaving, functional processing, coating, and laminating processes of the polyketone yarn.

### Advantageous effects

As is apparent from the fore-going description, the present invention advantageously provides a polyketone yarn coating processing method using a yarn coating technique, in which impartment of aesthetic properties and various functionalities to a yarn through PVC and TPU coating acts as a main mechanism.

When a yarn coating process is performed, physical properties of a polyketone yarn material vary depending on the type of coating agent used and an added functional pigment. The present technology can be expanded to high-strength polyketone fiber applications through suitable functionality processing for use for industrial and daily life applications of a polyketone yarn.

In addition, polyketone fiber materials which target for the world's first mass-production can replace high-strength PET and Nylon materials and super fiber materials, which are widely used as existing industrial fiber materials, due to excellent mechanical and physical properties thereof, such as high strength, high elongation, and the like, and thus the utilization of such polyketone materials is expected to be increased through yarn processing technology.

In addition, aesthetic effects and various functions such as color, UV stability, color fastness, and the like, which have been regarded as drawbacks of existing industrial fiber materials, of industrial materials can be realized, and such a polyketone material is at an initial stage of global commercialization, and thus a new market for industrial fibers is expected to be created through the present invention.

### Description of Drawings

FIG. 1 is a schematic diagram illustrating a polyketone yarn coating processing method according to the present invention.
FIG. 2 illustrates images showing a cross-section and a surface of a coated polyketone yarn obtained through yarn coating processing according to the present invention.
FIG. 3 illustrates comparison data between tensile strengths prior to and after a weather resistance test after yarn coating processing according to the present invention.
FIG. 4 illustrates comparison data between elongation prior to the weather resistance test and elongation thereafter after yarn coating processing according to the present invention.
FIG. 5 illustrates comparison data between modulus prior to the weather resistance test and modulus thereafter after yarn coating processing according to the present invention.

### Best mode

Hereinafter, the present invention will be described.

All terms used herein including technical or scientific terms have the same meaning as generally understood by those of ordinary skill in the art unless otherwise defined differently. It should be understood that generally-used terms, which are defined in a dictionary, have the same meaning as in a context of related technology, and the terms are not understood as having ideal or excessively formal meanings unless otherwise clearly defined in the application.

The present invention provides a polyketone yarn coating processing method including: introducing a polyvinyl chloride coating agent or a thermoplastic polyurethane coating agent into an extruder for yarn coating; and applying the coating agent to a surface of a polyketone yarn by the extruder for yarn coating.

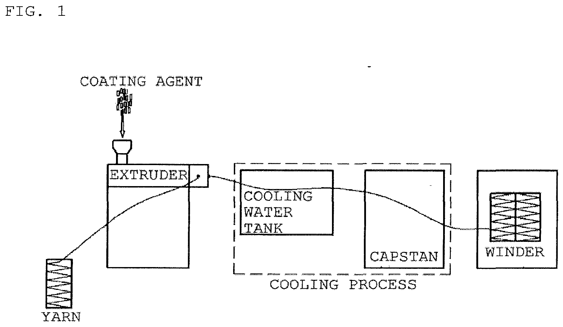

FIG. 1 is a schematic diagram illustrating a polyketone yarn coating processing method according to the present invention. As illustrated in FIG. 1, a fiber yarn may be introduced into an extruder that allows a coating agent to be melted, to perform coating on a surface of the fiber yarn, and coating processing may be performed on the polyketone yarn by a winding process via a cooling water tank and a capstan.

At this time, the applying of the coating agent may be performed at an operating temperature of 160°C or less in consideration of melting point, heat resistance temperature, and the like of a yarn, and an operating rate of the polyketone yarn may be 500 mpm or less according to the number of filaments. In addition, to increase coating processability, a texturing process, such as ATY, ITY, or the like, may be performed on a polyketone yarn material.

At this time, the coating agent may be applied to the polyketone yarn in an amount of 0.400 g/m or less, but the present invention is not limited thereto.

In addition, a PVC coating agent or a TPU coating agent may be used as the coating agent according to applications, but functionality may be imparted to the polyketone yarn according to need through mixing of the coating agent with various functional pigments such as a UV stabilizer, a color master batch chip, and the like.

In addition, the polyketone yarn coating processing method may further include, after the applying, one or more post-processing processes selected from the group consisting of weaving, functional processing, coating, and laminating processes of the polyketone yarn.

Through the above-described processes, a material that compensates for the disadvantages of polyketone materials, such as color, UV susceptibility, color fastness, and the like, and has excellent imparted functionality and mechanical and physical properties, for use in many applications may be provided.

Hereinafter, the present invention will be described in further detail with reference to the following examples, but these examples and experimental examples are provided only for illustrative purposes and are not intended to limit the scope of the present invention.

### Example

A polyketone yarn and a PVC coating agent were introduced into an extruder for yarn coating, customized for the processing of Tae-denier industrial fiber materials, and the PVC coating agent was applied to a surface of the polyketone yarn at an operating temperature of 160°C or less and an operating rate of 500 mpm or less, thereby completing preparation of a coated polyketone yarn.

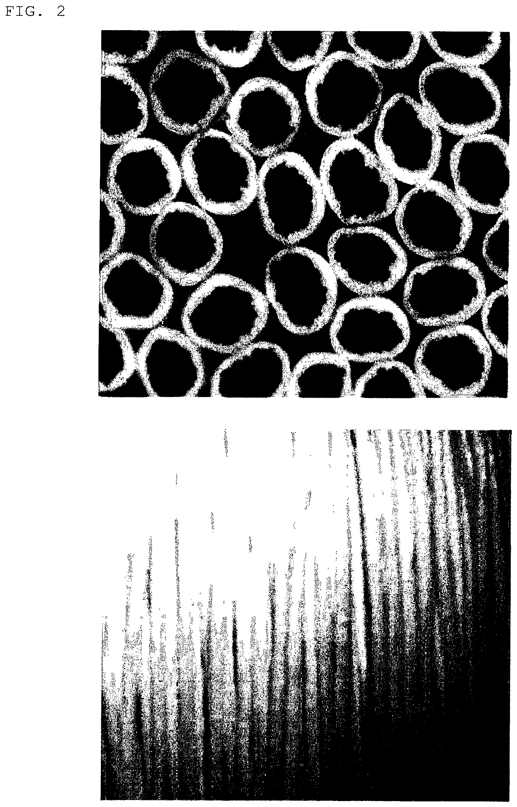

At this time, images of a cross-section and a surface of the prepared coated polyketone yarn are shown in FIG. 2.

### Experimental Example

To evaluate properties of the polyketone yarn according to the present invention before and after coating processing, the coated polyketone yarn prepared according to Example was subjected to treatment at a temperature of 60°C, a humidity of 60%, and a power of 0.67 w/m² for 1 day to 7 days using a weather resistance tester (Xenon Arc Weather-Ometer Ci5000), and results of measuring the tensile strength of the yarn based on KS K 0520 after the treatment processes are shown in Table 1 below.

**<Table 1>**

| | Before processing | Before treatment | Day 1 | Day 2 | Day 3 | Day 7 |
|---|---|---|---|---|---|---|
| Tenacity (g/d) | 17.1 | 15.48 | 15.79 | 13.94 | 14.64 | 13.86 |
| Elongation (%) | 5.7 | 4.9 | 5.3 | 5 | 5.2 | 4.9 |
| Modulus (g/d) | 351 | 405.3 | 392 | 373.2 | 366.5 | 383.7 |

### Experimental Example 1

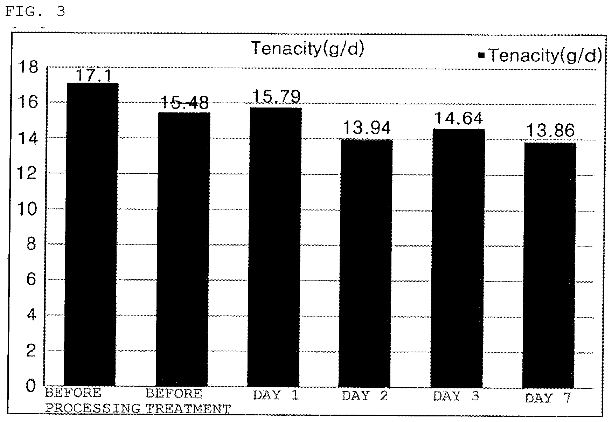

FIG. 3 illustrates comparison data between tensile strengths prior to and after a weather resistance test after yarn coating processing according to the present invention.

The polyketone fiber exhibited a decreased tensile strength, i.e., by about 1.62 g/d, after yarn coating processing and exhibited a slightly decreased tensile strength on day 1 after the weather resistance test, while exhibiting a reduced tensile strength over time. However, it was confirmed that the weather resistance test values after polyketone yarn coating were greater than those before polyketone yarn coating.

### Experimental Example 2

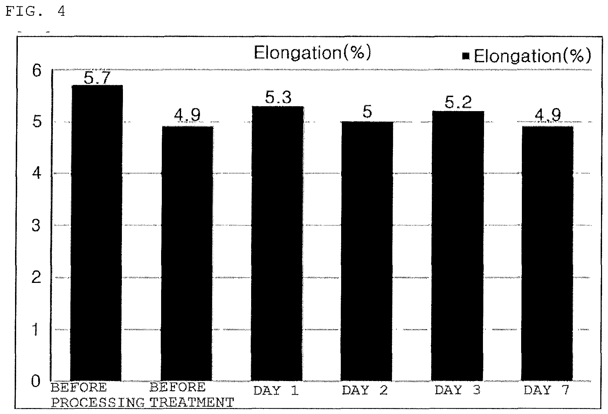

FIG. 4 illustrates comparison data between elongation prior to the weather resistance test and elongation thereafter after polyketone yarn coating processing according to the present invention.

From the experimental results, it was confirmed that elongation of the polyketone fiber even after the weather resistance test after yarn coating processing was about 85% or more that of the polyketone fiber before the yarn coating processing. This is considered to indicate that the elongation of a yarn is not significantly affected even by the yarn coating process.

### Experimental Example 3

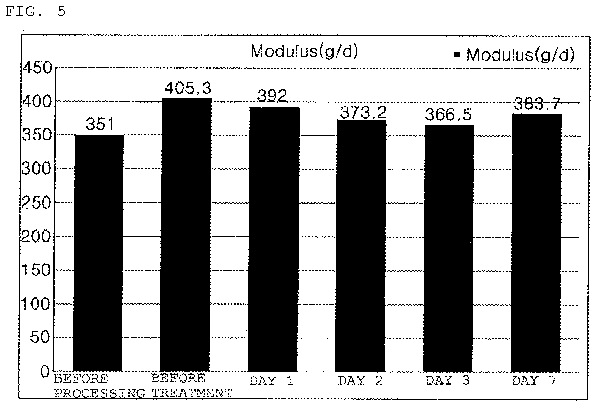

FIG. 5 illustrates comparison data between modulus prior to the weather resistance test and modulus thereafter after yarn coating processing according to the present invention.

From the experimental results, it was confirmed that, in the case of a polyketone fiber, the modulus of the polyketone fiber material was increased by 50 g/d or more after yarn coating processing, and exhibited a higher modulus value than that of an uncoated yarn even after the weather resistance test. This is considered to indicate that a tensile elastic modulus is increased due to the coating agent on the surface of the yarn.

## Claims

1. A polyketone yarn coating processing method comprising:
introducing a polyvinyl chloride coating agent or a thermoplastic polyurethane coating agent into an extruder for yarn coating; and
applying the coating agent to a surface of a polyketone yarn by the extruder.

2. The polyketone yarn coating processing method according to claim 1, wherein the applying is performed at a temperature of 160°C or less and an operating rate of 500 mpm or less, and the coating agent is applied to the polyketone yarn in an amount of 0.400 g/m or less.

3. The polyketone yarn coating processing method according to claim 1, wherein the coating agent further comprises one selected from a UV stabilizer and a color master batch chip.

4. The polyketone yarn coating processing method according to claim 1, further comprising, after the applying, one or more post-processing processes selected from the group consisting of weaving, functional processing, coating, and laminating processes of the polyketone yarn.
